# EUROPÄISCHE PATENTSCHRIFT

(11) **EP 1 336 385 B1**
(45) Veröffentlichungstag und Bekanntmachung des Hinweises auf die Patenterteilung: **14.11.2007**
(21) Anmeldenummer: 03000113.5
(22) Anmeldetag: 02.01.2003
(51) Int. Cl.: A61C 1/08, A61C 13/00

(54) **Verfahren zur Herstellung von Zahnersatz**
Fabrication method for dental prostheses
Méthode de fabrication de prothèses dentaires

(30) Priorität: 15.02.2002 DE 10206429
(43) Veröffentlichungstag der Anmeldung: 20.08.2003
(73) Patentinhaber: Firma Ivoclar Vivadent AG, FL-9494 Schaan (LI)
(72) Erfinder: Nanni, Marco, 39012 Meran (IT)
(74) Vertreter: Baronetzky, Klaus

(56) Entgegenhaltungen:
- US-A- 5 613 852
- US-A- 5 636 986
- US-A- 5 967 777

## Beschreibung

Die Erfindung betrifft ein Verfahren zur Herstellung von Zahnersatz, gemäß dem Oberbegriff von Anspruch 1, sowie eine Verwendung gemäß dem Oberbegriff von Anspruch 9.

Ein Verfahren zur Herstellung von Zahnersatz ist seit langem bekannt, beispielsweise aus der DE-OS 36 21 952, die ein Übungsmodell zeigt.

Ferner ist es bekannt geworden, als Hilfsmittel zur Planung der Lage der Implantate sogenannte Bohrschienen einzusetzen. Die US-A-5 967 777 beschreibt beispielsweise ein Verfahren zur Herstellung von Zahnersatz, wobei ein Abdruck der Mundsituation des Patienten genommen und basierend hierauf eine Basisplatte mit vorgefertigten röntgenopaken Zähnen angefertigt wird und die röntgenopaken Zähne auf der Basisplatte aufgestellt werden. In einem nächsten Schritt wird eine Erfassung der Aufstellsituation nach einem Einsetzen der Basisplatte mit den vorgefertigten Zähnen in den Mund des Patienten vorgenommen, anhand welcher, eine Bohrhilfe zur Verfügung gestellt wird.

Für die Verankerung der Implantate in der Knochensubstanz ist es entscheidend, dass hinreichend Knochensubstanz zur Verfügung steht. Hierzu muss das Bohrloch für die Verankerung des Implantats an der richtigen Stelle gesetzt werden.

Andererseits hat jede Verlagerung der Bohrachse eine Veränderung der Implantatlage zur Folge, so dass die Auswirkungen auf die Kausituation überprüft werden müssen. Manchmal ist die Abstimmung der einzubringenden Bohrungen für die Aufnahme der Implantate noch änderungsbedürftig, wenn sich etwa herausstellt, dass an einer Stelle doch zu wenig Knochensubstanz vorliegt, so dass die Bohrlochführung geändert werden muss. Nachdem der Zahnarzt oder der Zahntechniker bisher die Zähne selbst angefertigt hat, kann noch eine Nachbesserung vorgenommen werden, um die gnatologische Situation zu verbessern.

Zur Kontrolle des Zahnersatzes über Röntgenaufnahmen mischt der Zahntechniker in das polymerisierbare Material ein Röntgenkontrastmittel ein, so dass bei Röntgenaufnahmen die Stellung der zahnartigen Gebilde ersichtlich ist. Durch das Bohrschienenverfahren ist sichergestellt, dass der Zahnarzt bereits vor dem Festlegen der Bohrachsen durch das Röntgenbild feststellen kann, wie die Restauration in den Mund des Patienten zu planen ist.

Dieses Verfahren ist jedoch recht aufwendig und erfordert es, sehr präzise zu arbeiten, um Justierfehler beim Festlegen der Bohrachsen zu verhindern. Die Bohrschiene weist meist eine Oberfläche auf, auf die die frisch hergestellten, röntgenopaken Zahngebilde aufgeklebt werden können. Wenn nun die selbstgeformten Zähne nicht sehr präzise vom Zahntechniker im richtigen Winkel aufgestellt werden, entsteht ein Winkelfehler, denn durch das Aufkleben auf der Basisplatte wird das Zahngebilde so ausgerichtet, dass die Bohrachse ebenfalls mit einem entsprechenden Winkelfehler verlaufen würde. Dies kann der Zahnarzt dann zwar nachbessern, indem er die Bohrachse etwas schräg ansetzt. Dies erfordert jedoch viel Geschick und Erfahrung, ebenso die Herstellung der Zähne von Hand, wobei meist nur zahnartige Gebilde entstehen.

Daher liegt der Erfindung die Aufgabe zu Grunde, ein Verfahren gemäß dem Oberbegriff von Anspruch 1 zu schaffen, das die Herstellung von Zahnersatz mit Implantaten vereinfacht, wobei zugleich Kosteneinsparungen erzielt und die Präzision erhöht werden soll.

Diese Aufgabe wird erfindungsgemäß durch Anspruch 1 gelöst. Vorteilhafte Weiterbildungen ergeben sich aus den Unteransprüchen.

Die erfindungsgemäße Lösung ermöglicht es, mit überraschend einfachen Mitteln die Lage von Implantaten optimal zu bestimmen. Durch die Verwendung von industriell vorgefertigten und zugleich röntgenopaken Zähnen lässt sich erreichen, dass die Notwendigkeit der Nachbesserung deutlich reduziert wird. Die Präzision und Reproduzierbarkeit ist wesentlich größer als bei vom Zahntechniker selbst modellierten Zähnen, so dass die Zähne von vornherein funktionell aufgestellt werden können. Auch ist die Unterseite der industriell gefertigten Zähne winkeltreu und plan, so dass Kippfehler praktisch nicht entstehen können. Die Notwendigkeit, die Zähne im Nachhinein zu versetzen, um Winkelfehler zu kompensieren, ist daher deutlich reduziert. Es lässt sich mit der erfindungsgemäßen Lösung die Bohrschiene als Bohrvorlage in an sich bekannter Weise einsetzen, so dass der Zahnarzt die Lage der Bohrlöcher im Kieferknochen und zu der Mundsituation des Patienten passend festlegen kann.

Besonders günstig ist es, dass die Form und Festigkeit industriell hergestellter Zähne gegenüber den vom Zahntechniker selbst zusammengemischten und fertiggestellten Zähnen besser ist. Hierdurch lassen sich auch knapp liegende Bohrlöcher realisieren, ohne dass die Gefahr besteht, dass der Zahn bricht. Ein weiterer Gesichtspunkt ist die exaktere Kontour des Zahns im Röntgenbild, die bei industriell vorgefertigten Zähnen erreichbar ist. Durch die verbesserte Herstellung kann ein größerer Anteil von Röntgenkontrastmitteln wie beispielsweise Bariumsulfat verwendet werden, so dass die Kontour des Zahns deutlicher sichtbar ist.

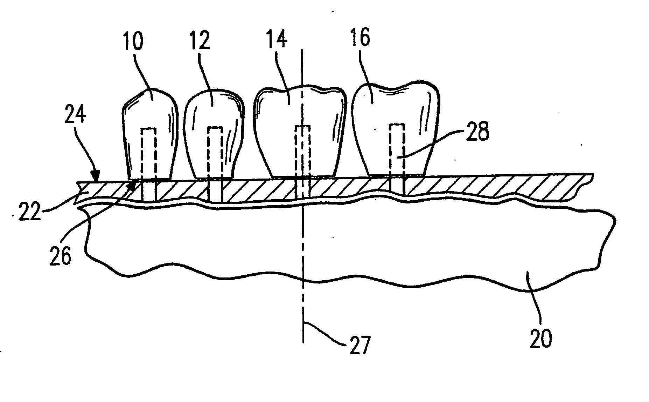

Weitere Vorteile, Einzelheiten und Merkmale ergeben sich aus der nachfolgenden Beschreibung eines Ausführungsbeispiels der Erfindung anhand der Zeichnung.

Es zeigt:
Die einzige Figur der Zeichnung einen Schnitt durch die Bohrschiene mit aufgesetzten erfindungsgemäßen Zähnen in Auflage auf einem zahnfreien Kiefer.

Erfindungsgemäß werden vorgefertigte, röntgenopake Zähne, von denen vier Zähne 10, 12, 14, und 16 in der Figur dargestellt sind, für die Realisierung des Zahnersatzes verwendet. Beim erfindungsgemäßen Verfahren wird zunächst in an sich bekannter Weise nach Abdrucknahme ein Modell der Mundsituation erstellt. Es sei im vorliegenden Ausführungsbeispiel auf einen zahnlosen Kiefer 20 verwiesen, wobei es sich versteht, dass auch bei Teilprothetik das erfindungsgemäße Verfahren eingesetzt werden kann. Der Zahntechniker fertigt entsprechend der Mundsituation eine Basisplatte mit Zähnen, die sogenannte Bohrschiene 22, an. In dem dargestellten Ausführungsbeispiel ist die Bohrschiene nach dem Kieferabdruck gefertigt und weist dementsprechend an ihrer Unterseite eine Kontour auf, die der Kieferoberfläche folgt.

Die Bohrschiene weist jedenfalls eine Oberseite 24 auf. Erfindungsgemäß werden die industriell vorgefertigten und röntgenopaken Zähne 10 bis 16 auf die Oberseite 24 aufgeklebt, anpolymerisiert oder auf andere Art befestigt. Hierzu kann ein an sich bekannter, handelsüblicher Kleber dienen, der eine Festigkeit aufweist, die es erlaubt, die Bohrschiene 22 samt dem je aufgesetzten Zahn zu durchbohren, ohne dass der Zahn sich löst, aber andererseits ein Entfernen des Zahnes z.B. durch Ausfräsen ermöglicht wird. Die industriell gefertigten Zähne weisen eine hohe Maßtreue auf.

Wenn die Zähne zur Zufriedenheit des Zahnarztes aufgestellt sind, setzt der Zahnarzt die Bohrschiene 22 zusammen mit den Zähnen 10 bis 16 in den Mund des Patienten ein und macht eine Röntgenaufnahme. Die Röntgenaufnahme oder die Röntgenaufnahmen lassen dann die Stellung der Zähne bezogen auf den Kiefer erkennen, und es kann festgelegt werden, in welcher Weise die Bohrlöcher durch die Zähne 10 bis 16 - und damit auch die Bohrungen in den Kiefer 20 - erfolgen sollen. Hierzu ist für den Zahn 14 eine Bohrachse 27 angedeutet.

Der Zahnarzt bzw. Zahntechniker fertigt dann entsprechende Bohrlöcher an, wobei - wie es aus der Figur ersichtlich ist - sowohl die Bohrschiene 22 als auch der betreffende Zahn 16 von dem Bohrloch 28 durchtreten wird.

Nachdem die Präzision der Aufstellung der Zähne erfindungsgemäß verbessert ist, kann auch mit einer recht geringen Stärke der Bohrschiene 22 gearbeitet werden. Die Zähne 10 bis 16 werden z.B. nicht entfernt und der Zahnarzt bohrt durch die Zähne und die Bohrschiene 22 hindurch die betreffenden Bohrungen in den Kiefer 20 des Patienten. Der Zahnarzt kann auch das in der Bohschiene befindliche Loch nur als Anhaltspunkt zum Markieren des zu bohrenden Lochs in den Kiefer verwenden. Dazu markiert er durch die Bohrung z.B. mit einem Stift Punkte auf dem Kieferknochen. Danach wird die Bohrschiene entfernt und direkt gebohrt. In an sich bekannter Weise schraubt dann der Zahnarzt Implantate in die Bohrungen im Kiefer, auf die die Zahnrestaurationen mit bekannten Mitteln angebracht werden. Durch die gute Festigkeit der industriell vorgefertigten Zähne ist eine derartige Technik auch bei kleineren Zähnen, also im Frontzahnbereich möglich.

Die Befestigung kann in an sich bekannter Weise auch über ein Abutment erfolgen. Ferner ist die Realisierung der Röntgenopazität der erfindungsgemäßen Zähne 10 bis 16 nicht auf die Verwendung von Bariumsulfat beschränkt, sondern es kann ein beliebiges Röntgenkontrastmittel eingesetzt werden. Z.B. kann dies ein Metallpulver sein oder bevorzugt Ytterbiumtrifluorid.

## Patentansprüche

1. Verfahren zur Herstellung von Zahnersatz, wobei ein Abdruck der Mundsituation des Patienten genommen und basierend hierauf eine Basisplatte mit vorgefertigten röntgenopaken Zähnen angefertigt wird und wobei die röntgenopaken Zähne auf der Basisplatte aufgestellt werden,
wobei in einem nächsten Schritt eine Erfassung der Aufstellsituation, insbesondere eine Röntgenaufnahme, nach einem Einsetzen der Basisplatte mit den vorgefertigten Zähnen in den Mund des Patienten, vorgenommen wird, dann der Zahnarzt bzw. Zahntechniker außerhalb des Mundes durch die Zähne Löcher bohrt und in Verbindung mit der Basisplatte eine Bohrhilfe zur Verfügung gestellt wird, **dadurch gekennzeichnet, dass** die Basisplatte als Bohrschiene angefertigt wird und dass die Zähne industriell vorgefertigt sind und eine plane Unterseite aufweisen, mit der sie auf der Bohrschiene befestigt werden.

2. Verfahren nach Anspruch 1,
**dadurch gekennzeichnet, dass** anhand Röntgenaufnahme der auf der Basisplatte befestigten industriell vorgefertigten Zähne die Lage der Bohrlöcher der Implantate bestimmt wird.

3. Verfahren nach Anspruch 1 oder 2,
**dadurch gekennzeichnet**, die Befestigung der industriell vorgefertigten Zähne auf der Basisplatte durch Polymerisation oder Kleben erfolgt.

4. Verfahren nach einem der vorhergehenden Ansprüche,
**dadurch gekennzeichnet, dass** der Zahnarzt die industriell vorgefertigten Zähne, die auf der Basisplatte verankert sind, entnimmt und außerhalb des Mundes Löcher als Bohrhilfe für den Einsatz der Implantate bohrt.

5. Verfahren nach Anspruch 4, **dadurch gekennzeichnet, dass** nach dem Durchbohren der röntgenopaken Zähne und der Bohrschiene, anhand der Löcher in der Bohrschiene eine Justierung des Implantats vorgenommen wird.

6. Verfahren nach einem der vorhergehenden Ansprüche,
**dadurch gekennzeichnet, dass** die Bohrschiene nach dem Kieferabdruck gefertigt wird, wobei sie an ihrer Unterseite eine Kontur aufweist, die der Kieferoberfläche folgt.

7. Verfahren nach einem der vorhergehenden Ansprüche,
**dadurch gekennzeichnet, dass** unter Verwendung der industriell vorgefertigten röntgenopaken Zähne ein Zahnersatz erstellt wird.

8. Verfahren nach Anspruch 1,
**dadurch gekennzeichnet, dass** die industriell vorgefertigten Zähne ein Röntgenkontrastmittel, insbesondere Ytterbiumtrifluorid, aufweisen.

9. Verwendung von röntgenopaken, industriell vorgefertigten Zähnen (10, 12, 14, 16), die eine plane Unterseite aufweisen, zum Setzen von Implantaten als Zahnersatz, wobei eine Basisplatte mit den Zähnen (10, 12, 14, 16) als Bohrhilfe für die Justierung des Implantats im Mund des Patienten eingesetzt wird, hierzu über eine Röntgenaufnahme die Restaurationssituation bei eingesetzten Zähnen (10, 12, 14, 16) erfasst wird und dann der Zahnarzt bzw. Zahntechniker außerhalb des Mundes durch die zähne Löcher bohrt und in Verbindung mit der Basisplatte eine Bohrhilfe in Form einer Bohrscheine zur Verfügung stellt.

## Claims

1. A method of producing dentures, wherein an impression of the mouth situation of the patient is taken and, based thereon, a base plate with prefabricated x-ray opaque teeth is produced, and wherein the x-ray opaque teeth are mounted on the base plate,
wherein in a next step the mounting situation is recorded, in particular as an x-ray image, after inserting the base plate with the prefabricated teeth into the patient's mouth, then the dentist or dental technician drills holes through the teeth outside the mouth and in combination with the base plate a drilling aid is made available, **characterised in that** the base plate is produced as a drilling rail and **in that** the teeth are prefabricated industrially and have a plane underside, with which they can be fastened on the drilling rail.

2. A method according to Claim 1, **characterised in that** by taking an x-ray image of the industrially prefabricated teeth fastened to the base plate the position of the drill holes of the implants is determined.

3. A method according to Claim 1 or 2, **characterised in that** the fastening of the industrially prefabricated teeth to the base plate is effected by polymerisation or adhesion.

4. A method according to any one of the preceding Claims, **characterised in that** the dentist removes the industrially prefabricated teeth which are anchored on the base plate and, outside the mouth, drills holes as a drilling aid for the insertion of the implants.

5. A method according to Claim 4, **characterised in that** after drilling through the x-ray opaque teeth and the drilling rail, adjustment of the implant is carried out based on the holes in the drilling rail.

6. A method according to any one of the preceding Claims, **characterised in that** the drilling rail is produced after the jaw impression, the rail having on its underside a contour which follows the jaw surface.

7. A method according to any one of the preceding Claims, **characterised in that** a denture is prepared using the industrially prefabricated x-ray opaque teeth.

8. A method according to Claim 1, **characterised in that** the industrially prefabricated teeth have an x-ray contrast medium, in particular ytterbium trifluoride.

9. Use of x-ray opaque, industrially prefabricated teeth (10,12,14,16), which have a plane underside, for setting implants as dentures, wherein a base plate with the teeth (10,12,14,16) is inserted in the patient's mouth as a drilling aid for the adjustment of the implant, to this end the restoration situation with inserted teeth (10,12,14,16) is recorded via an x-ray image and then the dentist or dental technician drills through the teeth outside the mouth and in combination with the base plate makes available a drilling aid in the form of a drilling rail.

## Revendications

1. Procédé de fabrication de prothèse dentaire, dans lequel est prise une empreinte de l'état de la bouche et, en fonction de cela, une plaque de base est fabriquée avec des dents préfabriquées opaques aux rayons X et
dans lequel les dents opaques aux rayons X sont placées sur la plaque de base, sachant que, dans une étape suivante, un enregistrement de la situation de pose, notamment une radiographie, est effectué après mise en place de la plaque de base dans la bouche du patient avec les dents préfabriquées, ensuite le dentiste ou le technicien du laboratoire dentaire perce des trous à travers les dents, hors de la bouche et un accessoire d'aide au forage est mise à disposition en rapport avec la plaque de base, **caractérisé en ce que** la plaque de base est fabriquée comme un rail de forage et que les dents sont préfabriquées industriellement et présentent un côté inférieur plat sur lequel elles sont fixées sur le rail de forage.

2. Procédé selon la revendication 1,
**caractérisé en ce que** des radiographies des dents préfabriquées industriellement fixées sur la plaque de base permettent de déterminer l'état des trous de forage des implants.

3. Procédé selon la revendication 1 ou 2,
**caractérisé en ce que** la fixation des dents préfabriquées industriellement sur la plaque de base se fait par polymérisation ou collage.

4. Procédé selon l'une des revendications précédentes,
**caractérisé en ce que** le dentiste retire les dents préfabriquées industriellement qui sont ancrées sur la plaque de base et perce des trous hors de la bouche pour aider au forage pour la mise en place des implants.

5. Procédé selon la revendication 4, **caractérisé en ce qu'**après le forage des dents opaques aux rayons X et des rails de forage, les trous dans le rail de forage permettent de procéder à un ajustage de l'implant.

6. Procédé selon l'une quelconque des revendications précédentes, **caractérisé en ce que** le rail de forage est fabriqué d'après l'empreinte de la maxillaire, sachant que son côté inférieur présente un contour qui suit la surface supérieure de la maxillaire.

7. Procédé selon l'une quelconque des revendications précédentes, **caractérisé en ce qu'**une prothèse dentaire est créée lors de l'utilisation de dents préfabriquées industriellement et opaques aux rayons X.

8. Procédé selon la revendication 1,
**caractérisé en ce que** les dents préfabriquées industriellement comportent une substance de contraste aux rayons X, notamment du triflorure d'ytterbium.

9. Utilisation de dents préfabriquées industriellement opaques aux rayons X (10, 12, 14, 16) qui comportent un côté inférieur plat, pour la pose d'implants comme prothèse dentaire, sachant qu'une plaque de base est mise en place avec les dents (10, 12, 14, 16) pour aider au forage pour l'ajustage de l'implant dans la bouche du patient, en plus une radiographie permet de détecter l'état de la restauration dans les dents posées (10, 12, 14, 16) et ensuite le dentiste ou le technicien du laboratoire dentaire perce des trous dans les dents hors de la bouche et un accessoire d'aide au fraisage est mis à disposition en rapport avec la plaque de base sous forme d'un rail de forage.
